# EUROPÄISCHE PATENTSCHRIFT

(11) **EP 1 371 931 B1**
(45) Veröffentlichungstag und Bekanntmachung des Hinweises auf die Patenterteilung: **23.08.2006**
(21) Anmeldenummer: 03007631.9
(22) Anmeldetag: 03.04.2003
(51) Int. Cl.: F41G 5/26

(54) **Verfahren und Vorrichtung zur Bestimmung eines Winkelfehlers und Verwendung der Vorrichtung**
Method and device for determining an angular error and use thereof
Procédé et dispositif pour déterminer une erreur angulaire et utilisation de ce dispositif

(30) Priorität: 14.06.2002 CH 2001025
(43) Veröffentlichungstag der Anmeldung: 17.12.2003
(73) Patentinhaber: OERLIKON CONTRAVES AG, 8050 Zürich (CH)
(72) Erfinder: Schneider, Gabriel, c/o Oerlikon Contraves AG, 8050 Zürich (CH)
(74) Vertreter: OK pat AG

(56) Entgegenhaltungen:
- EP-A- 0 383 043
- WO-A-88/08952

## Beschreibung

Die Erfindung betrifft ein Verfahren nach dem Oberbegriff des Anspruchs **1**, eine Vorrichtung zur Durchführung dieses Verfahrens nach dem Oberbegriff des Anspruchs **15** und eine Verwendung der Vorrichtung nach dem Anspruch **25** bzw. **26.**

Als Beispiel, aber ohne alle einschränkende Wirkung, soll im Folgenden die der Erfindung zu Grunde liegende Problematik an Hand einer Folge-Einrichtung wie zum Beispiel einer Tracker-bzw. Folge-Einrichtung mit einem Sensor oder Effektor beschrieben werden, wobei die Tracker-Einrichtung auf einer bewegbaren Montagefläche, beispielsweise einem Fahrzeug- bzw. Schiffsdeck, angeordnet ist. Beispielsweise können der Sensor eine Bildaufnahmevorrichtung und der Effektor ein Waffenrohr einer Rohrwaffe sein, wobei die optische Hauptachse der Bildaufnahmevorrichtung bzw. die Seelenachse des Waffenrohres mindestens annähernd als Hauptachse betrachtet werden kann. Der Sensor bzw. Effektor soll so bewegbar sein, dass seine Ausrichtung bzw. die Ausrichtung seiner Hauptachse immer mit der Lage eines sich relativ zum Sensor bzw. Effektor bewegenden externen Objektes korreliert ist somit dem Objekt folgt; im Falle eines Sensors bedeutet dies, dass sie immer direkt auf das bewegliche Ziel gerichtet sein soll, während es im Falle eines als Rohrwaffe ausgebildeten Effektors im Allgemeinen bedeutet, dass sie auf eine Stelle gerichtet ist, die das Objekt erst später erreicht, damit von der Rohrwaffe abgeschossenen Projektile sich an der besagten Stelle mit dem Objekt treffen.

Der Sensor bzw. Effektor ist starr an einer Aufnahme befestigt, mit welcher zusammen er im Wesentlichen eine eigentliche Wirkeinheit bildet. Die Aufnahme ist über eine Elevationsachse drehbar mit einem Träger verbunden; durch eine Rotation der Aufnahme relativ zum Träger um die Elevationsachse lässt sich im Wesentlichen die Elevation des Sensors bzw. Effektors einstellen; es wird angenommen, dass die Hauptachse in Ruhelage horizontal verläuft. Der Träger ist über eine Rollachse drehbar mit einer Trägerbasis verbunden; durch eine Rotation des Trägers relativ zur Trägerbasis um die Rollachse kann der Effekt einer Rollbewegung kompensiert werden, derart, dass die Elevationsachse horizontal bleibt oder nur kurzzeitig um einen geringen Wert von der Horizontalität abweicht; die Rollachse steht senkrecht zur Elevationsachse und unter einem Winkel von zum Beispiel 60° zu einer Seitenachse. Die Trägerbasis ist über die Seitenachse drehbar, mittelbar oder unmittelbar, mit dem Fahrzeug- bzw. Schiffsdeck verbunden; durch eine Rotation der Trägerbasis um die Seitenachse lässt sich im Wesentlichen der Seitenwinkel des Sensors bzw. Effektors einstellen; die Seitenachse ist in Ruhelage mindestens annähernd vertikal gerichtet.

Die oben angegebenen Richtungen bzw. Winkel der verschiedenen Drehachsen sind theoretische Werte, die einzuhalten man bestrebt ist. Die tatsächlichen Werte dieser Richtungen bzw. Winkel weichen im Allgemeinen von den theoretischen Werten ab. Die Abweichungen beruhen im Wesentlichen auf den zugelassenen Fertigungs- und Montagetoleranzen, darauf, dass Relativbewegungen im Allgemeinen nicht genau kontinuierlich sondern in - wenn auch kleinen- Schritten erfolgen, und auch auf Änderungen der relativen Schwerpunktslagen einzelner Elemente der Folge-Einrichtung bei ihren Bewegungen. Die Folge der Abweichungen bzw. Geometriefehler verursachen, dass die tatsächliche Richtung der Hauptachse des Sensors bzw. Effektors um einen - im Allgemeinen räumlichen-Winkelfehler von der theoretischen bzw. angestrebten Richtung abweicht. Mit anderen Worten, bei Rotationen um die Drehachsen weichen die Ist-Änderungen gewisser Winkel von den Soll-Änderungen dieser Winkel ab. Die Soll-Änderungen werden hierbei von einer Codervorrichtung zur Verfügung gestellt. Die Abweichungen der Ist-Änderungen von den Soll-Änderungen werden als Winkelfehler bezeichnet. Die Winkelfehler haben einen Einfluss auf die Resultate der Wirkeinheit, zum Beispiel auf die Genauigkeit, mit welcher ein Sensor ein Objekt vermisst.

Die Ermittlung der Winkelfehler geschieht im Allgemeinen werkseitig im Laufe eines Testverfahrens, zum Beispiel im Rahmen einer Qualitätskontrolle. Die Winkelfehler sind meist für die einzelnen Folge-Einrichtungen bzw. Folge-Einrichtungen-Typen unterschiedlich und beschreiben damit mindestens teilweise die einzelnen Folge-Einrichtungen bzw. Tracker-Einrichtungen. Zu diesem Zwekke werden die Winkelfehler gespeichert.

Die Winkelfehler sollen gewisse Grenzwerte nicht überschreiten. Sie können kompensiert werden, was entweder hardwaremässig bzw. apparativ durch Nachbearbeitungen und/oder Montagekorrekturen geschehen kann, oder aber softwaremässig, durch Berücksichtigung der ermittelten Winkelfehler, zum Beispiel bei der Verwertung der Resultate einer Sensorik.

Unabhängig davon, ob die Winkelfehler nur gespeichert werden, oder ob sie kompensiert werden, muss ihre Vermessung stattfinden.

Bei der bisher üblichen Vermessung solcher Winkelfehler wird eine Kettenvermessung durchgeführt. Hierbei wird mit einer Horizontierung begonnen, und anschliessend erfolgt Schritt für Schritt eine Messung von einer Achse zur nächsten, das heisst von der Seitenachse zur Rollachse und weiter zur Elevationsachse. Für diese Vermessung werden hauptsächlich optische Messgeräte benutzt wie beispielsweise Autokollimatoren, Theodoliten, Spiegel, Winkellibellen und Inklinometer. Zusätzlich wird eine Vielzahl von Adaptern, Haltern, Trägern und Ersatzmassen benötigt. Die Vielzahl der benötigten Mittel, deren unterschiedliche Auflösungs- und Messgenauigkeiten und die Notwendigkeit, sehr genau zu arbeiten, sind Nachteile des herkömmlichen Vermessungsverfahrens. Dessen gravierendster Nachteil liegt aber darin, dass sich durch die Kettenvermessung Messfehler akkumulieren und dass Kopplungsfehler praktisch nicht zu vermeiden sind.

Es ist daher **Aufgabe** der Erfindung,
- ein Verfahren der eingangs genannten Art anzugeben, mit welchem die Nachteile des herkömmlichen Verfahrens vermieden'werden;
- eine Vorrichtung der eingangs genannten Art zu schaffen, welche eine problemlose Durchführung des Verfahrens ermöglicht; und
- einer Verwendung der Vorrichtung vorzuschlagen.

Die **Lösung** dieser Aufgabe erfolgt erfindungsgemäss
- für das Verfahren durch die Merkmale des Anspruchs **1**;
- für die Vorrichtung durch die Merkmale des Anspruchs **15**; und
- für die Verwendung durch die Merkmale des Anspruchs **25** bzw. **26**.

Bevorzugte Weiterbildungen sind durch die jeweiligen abhängigen Ansprüche definiert.

Die Erfindung beruht auf dem Einsatz einer mindestens zwei-achsigen, vorzugsweise drei-achsigen opto-elektronischen Winkelmessvorrichtung wie zum Beispiel eines Laserkreisels, jedenfalls einer Winkelmessvorrichtung, die keine feste Orientierung im Raum verlangt, und die stets nur die jeweiligen Winkeländerungen angibt. Die Winkelmessvorrichtung bzw. der Laserkreisel wird, im Allgemeinen temporär für die Durchführung von Messvorgänge, anstelle eines Sensors oder Effektors oder zusätzlich zum Sensor bzw. Effektor so montiert, dass eine Messachse mit der Hauptachse möglichst zusammenfällt oder ggfs. möglichst parallel ist. Auch andere Montagekonfigurationen sind möglich, bedingen aber für eine übersichtliche Verwertung der Ergebnisse Koordinatentransformationen derselben. Die Wirkeinheit umfasst die Aufnahme und den Sensor bzw. Effektor und/oder die Winkelmessvorrichtung.

Durch die Verwendung einer Winkelmessvorrichtung in der Art eines Laserkreisels, das keine feste Orientierung im Raum, insbesondere keine Horizontierung, verlangt, ist die neue Vermessung gegenüber der herkömmlichen Vermessung bedeutend vereinfacht und ausserdem genauer. Bei Bewegungen der Aufnahme durch Rotationen die Seitenachse, die Rollachse und die Elevationsachse erkennt die Winkelmessvorrichtung jeweils die Ist-Änderungen des Winkels der Hauptachse. Mittels Bewegungen um jeweils nur eine der drei Drehachsen können die tatsächlichen bzw. Ist-Änderungen der Winkel bzw. die Relativlagen der Hauptachsen ermittelt werden. Die durchgeführten Bewegungen sind die gleichen, welche die Folge-Einrichtung auch im Einsatz ausführen würde.

Die auf diese neue Weise durchgeführte Vermessung ist sehr genau und wiederholbar. Da es sich letztlich um eine end-to-end-Messung handelt, fallen auch Fehler durch Kopplungen weg.

Zur Montage der Winkelmessvorrichtung bzw. Laserkreisels sind ggfs. wenige Adapterteile notwendig. Es ist von Bedeutung, dass die Massen- und Schwerpunktsverhältnisse durch die Montage der Winkelmessvorrichtung bzw. Laserkreisels nicht wesentlich verändert werden; eine Montage zusätzlich zur Effektorwirkeinheit kommt, abgesehen von der räumlichen Verhältnissen, nur in Frage, wenn die Masse der Winkelmessvorrichtung bzw. des Laserkreisels verhältnismässig gering ist; wird die Winkelmessvorrichtung bzw. der Laserkreisel anstelle des Sensors bzw. Effektors montiert, und ist seine Masse beträchtlich kleiner als diejenige des Sensors bzw. Effektors, so sollte eine ausgleichende Ersatzmasse angebracht werden.

Die Ergebnisse der Fehlervermessungsprozeduren sind nur schlüssig, wenn die Anordnung so ist, dass sich die Winkelmessvorrichtung in einer genau bekannten Relativlage zur Hauptachse des Effektors bzw. Sensors befindet; vorzugsweise ist die Anordnung so, dass eine relevante Messachse der Messachsen der opto-elektronischen Winkelmessvorrichtung mit der Hauptachse genau übereinstimmt, was vor der eigentlichen Vermessung der Winkelfehler verifiziert werden muss. Zu diesem Zweck kann eine Bewegung um die Elevationsachse durchgeführt werden. Fällt die relevante Messachse tatsächlich mit der Hauptachse zusammen, so beschreibt sie bei der Bewegung um die Elevationsachse eine Normalebene zur Elevationsachse. Fällt die relevante Messachse nicht mit der Hauptachse zusammen, so beschreibt sie bei der Bewegung um die Elevationsachse eine Kegelfläche, deren Spitze im Schnittpunkt von Messachse und Elevationsachse liegt. Ist diesem Fall muss eine Korrektur stattfinden, es sei den, der Öffnungswinkel der Kegelfläche sei nahezu 180°. Die Korrektur kann hardwaremässig oder softwaremässig durchgeführt werden, wobei im Allgemeinen eine softwaremässige Korrektur bevorzugt wird.

Nach dieser Korrektur wird die eigentliche Fehlervermessung durchgeführt. Hierbei erfolgt jeweils eine Rotation um eine der drei Drehachsen, das heisst um die Elevationsachse oder um die Rollachse oder um die Seitenachse, während Rotationen um die beiden anderen Drehachsen verhindert werden. Die Rotationen erfolgen schrittweise. Nach jedem Rotationsschritt wird von der Codervorrichtung die Soll-Änderung des Winkels zur Verfügung gestellt, und die opto-elektronische Winkelmessvorrichtung bzw. der Laserkreisel liefert die entsprechende Ist-Änderung. Die sich entsprechenden Soll-Änderungen und Ist-Änderungen werden in einer Speichereinheit gespeichert.

Damit ist die eigentliche Fehlervermessung im engeren Sinne abgeschlossen. Was nun folgt, ist eine Auswertung der Ergebnisse dieser Vermessung.

Die Ergebnisse der Fehlervermessung, also nur die Ist-Änderungen und die Soll-Änderungen der jeweiligen Winkel, sind in der Speichereinheit gespeichert und können, wie schon erwähnt, lediglich dazu dienen, die einzelnen Folge-Einrichtungen zu charakterisieren.

Im Allgemeinen weist die Vorrichtung eine Datenverarbeitungsanlage auf bzw. ist mit einer solchen gekoppelt. Mittels einer Rechnereinheit der Datenverarbeitungsanlage kann mit den Ergebnissen der Fehlervermessung eine Matrix erstellt werden.

Mit der Rechnereinheit werden im Allgemeinen Winkelfehler, das heisst Differenzen zwischen den Ist-Änderungen und den Soll-Änderungen der Winkel, berechnet.

Diese Winkelfehler können entweder lediglich gespeichert werden oder als Grundlage für Kompensationen benutzt werden. Kompensationen können mit Hardware oder Software erfolgen.

-Kompensationen mit Hilfe von Software können so durchgeführt werden, dass empirische Fehlerfunktionen und ggf. aus diesen empirischen Fehlerfunktionen mathematische Fehlerfunktionen erstellt werden, die bei der Benutzung der Folge-Einrichtung für deren Steuerung berücksichtigt werden.

Kompensationen, insbesondere hardwaremässige Kompensationen, werden im Allgemeinen nur dann durchgeführt, wenn die Winkelfehler gewisse vorgebbare Grenzwerte überschreiten. Zu diesem Zwecke kann die Rechnereinheit die ermittelten Winkelfehler mit vorgebbaren Grenzwerten vergleichen.

Die Datenverarbeitungsanlage kann eine Druckereinheit aufweisen, um Hartkopien von Daten im Zusammenhang mit dem Verfahren nach der Erfindung zu erstellen.

Vorzugsweise besitzt die Datenverarbeitungsanlage eine Visualisierungseinheit.

Im Weiteren kann die Datenverarbeitungsanlage eine Eingabeeinheit aufweisen, um das neu Verfahren, meist in Zusammenwirkung mit der Visualisierungseinheit, ganz oder teilweise zu steuern.

Die Erfindung wird insbesondere verwendet, um Winkelfehler von Hauptachsen von Sensoren bzw. Effektoren von Folge-Einrichtungen zu ermitteln, wobei die Wirkeinheit, genauer gesagt die Aufnahme des Sensors bzw. Effektors unmittelbar um eine Elevationsachse und mittelbar um eine Rollachse und eine Seitenachse drehbar ist. Hierbei kann der Sensor eine Bildaufnahmevorrichtung wie zum Beispiel eine TV-Kamera, der Effektor eine Rohrwaffe und die Montagefläche für die Folge-Einrichtung eine bewegbare Fläche, beispielsweise eines Fahrzeuges oder Schiffes, insbesondere ein Fahrzeug- oder Schiffsdeck, sein.

Die Vorrichtung kann bezüglich ihrer Positionierung autonom bzw. von einer externen Positionierung entkoppelt sein. Sie kann aber auch, beispielsweise mit Hilfe einer PSD-Vorrichtung, mit einer externen Positionierung gekoppelt sein.

Weitere Einzelheiten der Erfindung werden im Folgenden an Hand eines Ausführungsbeispiels und mit Bezug auf die Zeichnung beschrieben. Es zeigen:
- **Fig. 1**: einen Folge-Einrichtung mit einer ersten Vorrichtung nach der Erfindung, in stark vereinfachter, schematisierter Darstellung; und
- **Fig. 2**: die in Fig. 1 dargestellte Folge-Einrichtung mit einer zweiten Vorrichtung nach der Erfindung, in gleicher Darstellung wie Fig. 1.

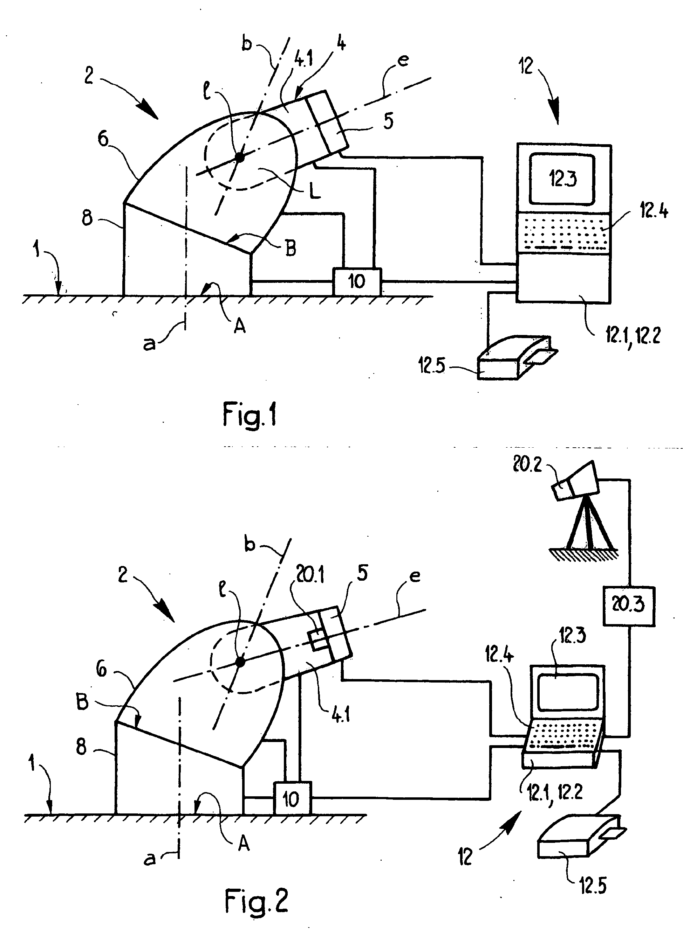

**Fig. 1** zeigt eine Montagefläche **1** mit einer Folge-Einrichtung **2.** Die Folge-Einrichtung **2** umfasst im Einsatz im Wesentlichen eine Wirkeinheit **4,** nämlich einen Sensor oder Effektor oder eine Winkelmessvorrichtung **5**, ferner einen Träger **6** und schliesslich eine Trägerbasis **8**. Die Wirkeinheit bildet keinen Bestandteil der Vorrichtung nach der Erfindung.

Die Wirkeinheit **4** weist eine Aufnahme **4.1** auf. Ist die Folge-Einrichtung **2** einsatzbereit, so ist an der Aufnahme **4.1** der Sensor oder Effektor befestigt, der eine Hauptachse **e** besitzt. Zur Durchführung des Verfahrens nach der Erfindung, das ein Testverfahren ist, wird an der Aufnahme **4.1** temporär die drei-achsige Winkelmessvorrichtung **5** so befestigt, dass eine ihrer Messachsen mit der Hauptachse **e** mindestens richtungsmässig zusammenfällt; eine Abweichung der genannten Messachse von ihrer Soll-Richtung bei einer Bewegung der Aufnahme **4.1** entspricht einer Abweichung der Hauptachse **e** bei einer gleichen Bewegung der Aufnahme **4.1.**

Die Wirkeinheit **4** bzw. die Aufnahme **4.1** ist über eine Elevationsachse **I** drehbar mit dem Träger **6** gekoppelt und kann relativ zum Träger **6** längs einer oberen Drehebene **L** gedreht werden. In der Anordnung gemäss **Fig. 1** sind die Elevationsachse **I** senkrecht und die obere Drehebene **L** parallel zur Zeichnungsebene, die Elevationsachse **I** stellt sich demgemäss als Punkt dar. Die Elevationsachse **I** ist im hier beschriebenen Beispiel in einem Ruhezustand horizontal. Durch Drehung um die Elevationsachse **I** wird im Wesentlichen der Elevationswinkel λ der Hauptachse **e** eingestellt.

Es wird nun erläutert, in welcher Weise bei bzw. nach der Montage des Winkelmessvorrichtung **5** vorgegangen wird, um Lage und Ausrichtung des Winkelmessgerätes **5** festzustellen und um Abweichungen von der idealen bzw. angestrebten Lage bzw. Ausrichtung zu kompensieren. Wie schon erwähnt, wird das Winkelmessgerät **5** an Stelle des im Einsatz der Folge-Einrichtung **2** verwendeten Sensors oder Effektors an der Aufnahme 4.1 befestigt. Weist die Winkelmessvorrichtung **5** eine merklich geringere Masse auf als der Sensor oder Effektor, so muss dies durch die zusätzliche Anordnung einer Ausgleichsmasse an einer geeigneten Stelle kompensiert werden. Anschliessend wird, wie weiter oben beschrieben, durch Rotation um die Elevationsachse **l** geprüft, ob und um wieviel Lage und Ausrichtung der Messhauptachse von der Hauptachse **e** abweicht. Die Kompensation dieser Abweichung kann hardwaremässig durch Nachbearbeitung und/oder genauere Montage der Winkelmessvorrichtung **5** erfolgen. Die Kompensation kann auch softwaremässig erfolgen, indem die Abweichung gespeichert und bei der Ermittlung bzw. Verwertung der Ergebnisse des Verfahrens nach der Erfindung rechnerisch berücksichtigt wird.

Der Träger **6** ist über eine Rollachse **b** drehbar mit der Trägerbasis **8** gekoppelt und kann relativ zur Trägerbasis **8** längs einer mittleren Drehebene **B** gedreht werden. Die Rollachse **b** steht theoretisch senkrecht zur Elevationsachse **I.** Eine Drehung um die Rollachse **b** erfolgt zur Kompensation eines Rollwinkels β, der sich bei einer bewegten Montagefläche **1** im Allgemeinen dauernd ändert.

Die Trägerbasis **8** ist, mittelbar oder unmittelbar, über eine Seitenachse a drehbar an der Montagefläche **1** angeordnet und längs einer unteren Drehebene **A** relativ zur Montagefläche **1** drehbar. Die Seitenachse a steht unter einem theoretisch festen Winkel φ zur Rollachse **b** und ist im vorliegenden Beispiel in einem Ruhezustand vertikal. Durch Drehung um die Seitenachse **a** wird im Wesentlichen der Seitenwinkel α der Wirkeinheit **4** bzw. der Hauptachse **e** eingestellt.

Es wird hier darauf hingewiesen, dass im vorliegenden Fall die absoluten Elevations und Seitenwinkel der Wirkeinheit **4** bzw. der Hauptachse **e** nicht ausschliesslich durch den Elevationswinkel λ bzw. den Seitenwinkel α bestimmt sind, weil davon ausgegangen wird, dass die Montagefläche **1** bewegt aber nicht horizontal ist.

Die Folge-Einrichtung **2** weist eine Codervorrichtung **10** zu jeder der Drehebenen **L, B** und A auf. Ausgehend von einer jeweiligen Nulllage, stellt bei einer Rotation um eine der Drehachsen, das heisst um die Elevationsachse **I** oder um die Rollachse **b** oder um die Seitenachse **a,** bei gleichzeitiger Verhinderung von Rotationen um die jeweils anderen zwei Drehachsen, die Codervorrichtung **10** die Soll-Änderung Δε* des Raumwinkels der Hauptachse **e** zur Verfügung. Die Rotationen erfolgen in Rotationsschritten, und nach jedem Rotationsschritt wird die entsprechende Soll-Änderung Δε* festgehalten.

Gleichzeitig wird nach jedem Drehschritt durch das Winkelmessgerät **5** die Ist-Änderung Δε des Raumwinkels der Hauptachse **e** gemessen.

Die Soll-Änderungen Δε* und die zugehörigen Ist-Änderungen Δε, die bei den verschiedenen Ermittlungsvorgängen gewonnen werden, werden im Sinne einer Tabelle gespeichert und können auch verwertet werden.

Zu diesem Zweck sind die Winkelmessvorrichtung **5** und die Codervorrichtung **10** mit einer Datenverarbeitungsanlage **12**, im vorliegenden Fall einem geeigneten Laptop, verbunden. Die Datenverarbeitungsanlage **12** weist eine Speichereinheit **12.1** zum Speichern der Soll-Änderungen und der Ist-Änderungen sowie ggfs. weiterer Daten im Zusammenhang mit dem Verfahren nach der Erfindung auf. Im Weiteren weist die Datenverarbeitungsanlage **12** eine Rechnereinheit **12.2** auf; die Rechnereinheit **12.2** dient zur Erstellung einer mehrdimensionalen Matrix auf Grund der Ist-Änderungen und den Soll-Änderungen unter Berücksichtigung der jeweiligen Rotationsrichtungen und Rotationsschritte. Durch diese Matrix wird die jeweils getestete Folge-Einrichtung bzw. ihre geometrischen Abweichungen von ihrer angestrebten Idealkonfiguration repräsentiert. Ferner weist die Datenverarbeitungsanlage eine Visualisierungseinheit **12.3** zur Visualisierung von Daten in Tabellen- und/oder Graphikform im Zusammenhang mit dem Verfahren nach der Erfindung auf. Schliesslich weist die Datenverarbeitungsanlage **12** eine Eingabeeinheit **12.4** auf. Die Eingabeeinheit **12.4**, meist in Zusammenwirkung mit der Visualisierungseinheit **12.3**, dient sowohl zur Verwertung der Ergebnisse der Ermittlungsvorgänge wie auch zur Steuerung des gesamten Verfahrens nach der Erfindung. Eine Druckereinheit **12.5** dient zur Erstellung von Hartkopien von Daten, die im Zusammenhang mit dem neuen Verfahren stehen.

Bei der mit Bezug auf **Fig. 1** beschriebenen Anordnung wird ohne äussere Referenzmarke gearbeitet. Insbesondere wenn eine Zusammenwirkung mit externen Einheiten beabsichtigt ist, wird vorteilhaft eine Anordnung gemäss **Fig.** 2 eingesetzt. Die Anordnung gemäss **Fig. 2** ist grundsätzlich gleich aufgebaut wie die Anordnung der **Fig. 1,** gleiche bzw. entsprechende Teile sind mit gleichen Bezugszeichen versehen. Zusätzlich weist die Anordnung gemäss **Fig. 2** eine PSD-Einrichtung auf, mit deren Hilfe eine Verknüpfung mit einem externen Referenzsystem erfolgen kann. Die PSD-Einrichtung besteht im Wesentlichen aus einem PSD-Laser-Emitter **20.1,** der an der Aufnahme befestigt ist, einem PSD-Empfänger **20.2** und einer PSD-Elektronik **20.3.**

## Patentansprüche

1. Verfahren zur Ermittlung von Ist-Änderungen (Δε) und Soll-Änderungen (Δε*) eines Raumwinkels einer Hauptachse (e) eines an einer Aufnahme (4.1) befestigten Sensors oder Effektors, welche Aufnahme (4.1) unmittelbar um eine erste Drehachse (1) und mittelbar um mindestens eine weitere Drehachse (b, a) rotierbar ist, wobei
- eine opto-elektronische Winkelmessvorrichtung (5) mit mindestens zwei Messachsen an der Aufnahme (4.1) befestigt wird,
- für eine erste der Drehachsen (l, b, a) ein Ermittiungsvorgang durchgeführt wird, bei welchem eine Drehung in Rotationsschritten um diese erste Drehachse (l, b, a) erfolgt, während jede Rotation um die mindestens eine weitere Drehachse ausbleibt, und wobei nach jedem Rotationsschritt
- eine erste Ist-Änderung (Δε) des Raumwinkels der Hauptachse (e) durch die Winkelmessvorrichtung (5) erfasst und gespeichert wird, und
- eine erste Soll-Änderung (Δε*) des Raumwinkels der Hauptachse (e) von einer Codervorrichtung (10) zur Verfügung gestellt und gespeichert wird.

2. Verfahren nach Anspruch **1,**
**dadurch gekennzeichnet,**
**dass** für die mindestens eine weitere Drehachse (1, b, a) ein Ermittlungsvorgang durchgeführt wird, bei welchem eine Rotation in Rotationsschritten um diese mindestens eine weitere Drehachse (1, b, a) erfolgt, während Rotationen um die erste und um ggfs. noch weitere Drehachsen ausbleiben, und dass nach jedem Rotationsschritt
- eine zweite Ist-Änderung (Δε) des Raumwinkels der Effektor-Hauptachse (e) durch die Winkelmessvorrichtung (5) erfasst und gespeichert wird, und
- eine zweite Soll-Änderung (Δε*) des Raumwinkels der Effektor-Hauptachse (e) von einer Codervorrichtung (10) zur Verfügung gestellt und gespeichert wird.

3. Verfahren nach Anspruch **1** oder **2,**
**dadurch gekennzeichnet,**
**dass** Winkelfehler als Differenzen zwischen den Ist-Änderungen (Δε) und den zugehörigen Soll-Änderungen (Δε*) ermittelt und gespeichert werden, wobei beispielsweise mit den erfassten Winkelfehlern eine Matrix gebildet und protokolliert wird.

4. Verfahren nach Anspruch **3,**
**dadurch gekennzeichnet,**
**dass** nach dem Ermitteln der Winkelfehler ein Vergleich durchgeführt wird, bei dem die Winkelfehler mit einem vorgegebenen Grenzwert, der grösser oder gleich 0° ist, verglichen werden.

5. Verfahren nach Anspruch **4,**
**dadurch gekennzeichnet,**
**dass** Massnahmen zur Kompensation mindestens eines Teils der Winkelfehler durchgeführt werden, falls die Winkelfehler grösser sind als die vorgebbaren Grenzwerte.

6. Verfahren nach Anspruch **5,**
**dadurch gekennzeichnet,**
**dass** die Massnahmen zur Kompensation der Winkelfehler eine Änderung der Ausbildung **und/oder** Anordnung von mindestens einem von, den Winkelfehler verursachenden, Bauteilen umfassen.

7. Verfahren nach Anspruch **5,**
**dadurch gekennzeichnet,**
**dass** nach der Kompensation eines Winkelfehlers einer oder mehrere weitere Ermittlungsvorgänge und Vergleiche und ggfs. nach jedem Vergleich weitere Massnahmen zur Kompensation des Winkelfehlers durchgeführt werden.

8. Verfahren nach Anspruch **5**,
**dadurch gekennzeichnet,**
**dass** die Massnahmen zur Kompensation mindestens eines Teils der Winkelfehler rechnerisch erfolgen.

9. Verfahren nach Anspruch **1,**
**dadurch gekennzeichnet,**
- **dass** vor der Durchführung des ersten Ermittlungsvorganges die räumliche Achs-Abweichung einer Hauptmessachse der Winkelmessvorrichtung (5) von der Hauptachse (e) bestimmt wird, und
- **dass** Massnahmen zur Kompensation dieser Achs-Abweichung durchgeführt werden.

10. Verfahren nach Anspruch **9,**
**dadurch gekennzeichnet,**
**dass** die Massnahmen zur Kompensation der Achs-Abweichung eine Änderung der Anordnung des opto-elektronischen Winkelmessgerätes (5) beinhalten.

11. **Verfahren** nach Anspruch **9,**
**dadurch gekennzeichnet,**
**dass** die Massnahmen zur Kompensation der Achs-Abweichung rechnerisch bei der Feststellung der Ermittlung der Ist-Änderungen der Winkel durchgeführt werden.

12. Verfahren nach einem der Ansprüche **1** bis **11,**
**dadurch gekennzeichnet,**
**dass** es mindestens semi-automatisiert aber mit der Möglichkeit eines manuellen Eingriffes mit Hilfe einer Eingabeeinheit (12.4) und vorzugsweise einer Visualisierungseinheit (12.3) durchgeführt wird.

13. Verfahren nach einem der Ansprüche **1** bis **12,**
**dadurch gekennzeichnet,**
**dass** Daten in einer Speichereinheit (12.2) und/oder mittels einer Drukkereinheit (12.5) in einer Hartkopie festgehalten werden.

14. Verfahren nach einem der Ansprüche **1** bis **12,**
**dadurch gekennzeichnet,**
**dass** eine Verknüpfung mit einem externen System mit Hilfe einer PSD-Einrichtung (20) durchgeführt wird.

15. Vorrichtung zur Ermittlung von Soll-Änderungen (Δρ*) und Ist-Änderungen (Δε) von Raumwinkeln einer Hauptachse (e) eines an einer Aufnahme (4.1) befestigbaren Sensors oder Effektors, welche Aufnahme (4.1) unmittelbar um eine erste Drehachse (1, b, a) und mittelbar um mindestens eine weitere Drehachse (1) rotierbar ist, mit einer Codervorrichtung (10), die dazu ausgebildet ist, bei Rotationen der Aufnahme (4.1) die Soll-Änderungen (Δε*) des Raumwinkels einer Hauptachse (e) des Sensors bzw. Effektors zur Verfügung zu stellen,
**dadurch gekennzeichnet,**
**dass** die Vorrichtung aufweist
- eine an der Aufnahme (4.1) befestigbare opto-elektronische Winkelmessvorrichtung (5), welche mindestens zwei Messachsen besitzt, zur Erfassung der Ist-Änderungen (Δε) des Raumwinkels der Hauptachse (e) bei Rotationen um nur eine der Drehachsen (1, b, a), und
- eine Speichereinheit (12.2) zum Speichern der Soll-Änderungen (Δε*) und der zugehörigen Ist-Änderungen (Δε).

16. Vorrichtung nach Anspruch **15,**
**dadurch gekennzeichnet,**
**dass** die opto-elektronische Winkelmessvorrichtung (5) insgesamt drei vorzugsweise orthogonal zueinanderstehende Messachsen aufweist und vorzugsweise so an der Aufnahme (4.1) befestigbar ist, dass im Rahmen einer üblichen Herstellungs- und Montagegenauigkeit eine der Messachsen mit der Hauptachse (e) mindestens richtungsmässig zusammenfällt.

17. Vorrichtung nach einem der Ansprüche **15** bis **16,**
**dadurch gekennzeichnet,**
**dass** die Winkelmessvorrichtung (5) einen Laserfaserkreisel aufweist.

18. Vorrichtung nach einem der Ansprüche **15** bis **17,**
**dadurch gekennzeichnet,**
**dass** sie im Weiteren eine Datenverarbeitungsanlage (12) aufweist, mit einer Rechnereinheit (12.1) zur Berechnung von Winkelfehlern als Differenzen zwischen den von der Winkelmessvorrichtung (5) ermittelten Ist-Änderungen (Δε) und den von der Codervorrichtung (10) zur Verfügung gestellten Soll-Änderungen (Δε*).

19. Vorrichtung nach Anspruch **18,**
**dadurch gekennzeichnet,**
**dass** die Rechnereinheit (12.1) dazu ausgebildet ist, eine Winkelfehler-Differenz zwischen einem berechneten Winkelfehler und einem vorgebbaren Grenzwert zu ermitteln.

20. **Vorrichtung** nach einem der Ansprüche **17 bis 19,**
**dadurch gekennzeichnet,**
**dass** die Rechnereinheit dazu ausgebildet ist, auf Grund der Ist-Änderungen und der Soll-Änderungen eine Matrix zu bilden.

21. Vorrichtung nach einem der Ansprüche **17** bis **20,**
**dadurch gekennzeichnet,**
- **dass** die Datenverarbeitungsanlage (12) eine Druckereinheit (12.5) besitzt, um von mindestens einem Teil von ermittelten Daten Hartkopien zu erstellen.

22. Vorrichtung nach einem der Ansprüche **17** bis **21,**
**dadurch gekennzeichnet,**
**dass** die Datenverarbeitungsanlage (12) eine Eingabeeinheit (12.3) besitzt, um Funktionen der Codervorrichtung (10) und/oder der Winkelmessvorrichtung (5) und/oder der Datenverarbeitungsanlage (12) zu steuern.

23. Vorrichtung nach einem der Ansprüche 15 bis 23,
**dadurch gekennzeichnet, dass** sie von externen Positionierungen entkoppelt ist.

24. Vorrichtung nach einem der Ansprüche 15 bis 23,
**dadurch gekennzeichnet,**
**dass** sie mittels einer PSD-Vorrichtung (20) mit einer externen Positionierung koppelbar ist.

25. Verwendung der Vorrichtung nach einem der Ansprüche 15 bis 24,
**dadurch gekennzeichnet,**
**dass** eine Trägerbasis (8), an welcher die Aufnahme (4.1) über einen Träger (6) befestigt ist, unmittelbar oder mittelbar auf einer bewegbaren Montagefläche (1) befestigbar ist.

26. Verwendung der Vorrichtung nach einem der Ansprüche 15 bis 24,
**dadurch gekennzeichnet,**
**dass** die Aufnahme (4.1), der Träger (6) und die Trägerbasis (8) Teile einer Folge-Einrichtung (2) sind, die dazu bestimmt ist, durch Korrelation der Hauptachse (e) mit der Lage eines externen Objektes ausgerichtet zu werden.

27. Verwendung nach Anspruch 26,
**dadurch gekennzeichnet,**
**dass** die Folge-Einrichtung (2) eine optische Tracker-Einrichtung und die Hauptachse (e) die Hauptachse einer den Sensor bildenden Bildaufnahmevorrichtung ist.

28. Verwendung nach Anspruch **26,**
**dadurch gekennzeichnet,**
**dass** die Folge-Einrichtung (2) eine Rohrwaffe und die Hauptachse (e) die Hauptachse eines den Effektor bildenden Waffenrohres ist.

## Claims

1. Method of establishing actual changes (Δε) and intended changes (Δε*) of a spatial angle of a main axis (e) of a sensor or effector attached to a receiver (4.1), which receiver (4.1) is rotatable directly around a first axis of rotation (I) and indirectly around at least one further axis of rotation (b, a), whereby
- an optical-electronic angular measurement device (5) with at least two measurement axes is attached to the receiver (4.1),
- for a first of the axes of rotation (I, b, a), a determination procedure is performed, in which a rotation is performed in rotation steps around this first axis of rotation (I, b, a), while refraining from any rotation around the at least one further axis of rotation, and whereby after each rotation step
- a first actual change (Δε) of the spatial angle of the main axis (e) is detected by the angular measurement device (5) and stored, and
- a first intended change (Δε*) of the spatial angle of the main axis (e) is provided by a coder device (10) and stored.

2. Method according to Claim 1,
**characterized in**
**that** a determination procedure is performed for the at least one further axis of rotation (I, b, a), in which a rotation is performed in rotation steps around this at least one further axis of rotation (I, b, a), while refraining from rotations around the first and possibly even further axes of rotation, and that after each rotation step
- a second actual change (Δε) of the spatial angle of the effector main axis (e) is detected by the angular measurement device (5) and stored, and
- a second intended change (Δε*) of the spatial angle of the effector main axis (e) is provided by a coder device (10) and stored.

3. Method according to Claim 1 or 2,
**characterized in**
**that** angular errors are determined as differences between the actual changes (Δε) and the associated intended changes (Δε*) and stored, whereby for example a matrix is formed using the detected angular errors and logged.

4. Method according to Claim 3,
**characterized in**
**that** after the angular errors are determined, a comparison is performed, in which the angular errors are compared to a preset limiting value, which is greater than or equal to 0°.

5. Method according to Claim 4,
**characterized in**
**that** measures to compensate for at least part of the angular errors are performed if the angular errors are greater than the predefinable limiting values.

6. Method according to Claim 5,
**characterized in**
**that** the measures to compensate for the angular errors comprise a change of the implementation and/or positioning of at least one of the components which cause the angular errors.

7. Method according to Claim 5,
**characterized in**
**that** after an angular error is compensated for, one or more further determination procedures and comparisons and, if necessary, further measures to compensate for the angular error after each comparison are performed.

8. Method according to Claim 5,
**characterized in**
**that** the measures to compensate for at least part of the angular errors are performed arithmetically.

9. Method according to Claim 1,
**characterized in**
- **that** before the first determination procedure is performed, the spatial axial deviation of a main measurement axis of the angular measurement device (5) from the main axis (e) is determined, and
- **that** measures to compensate for this axial deviation are performed.

10. Method according to Claim 9,
**characterized in**
**hat** the measures to compensate for the axial deviation include a change of the arrangement of the optical-electronic angular measurement device (5).

11. Method according to Claim 9,
**characterized in**
**that** the measures to compensate for the axial deviation are performed arithmetically while the actual changes of the angle are determined.

12. Method according to one of Claims 1 to 11,
**characterized in**
**that** it is performed at least semi-automated, but with the possibility of a manual intervention with the aid of an input unit (12.4) and preferably a display unit (12.3).

13. Method according to one of Claims 1 to 12,
**characterized in**
**that** data is retained in a storage unit (12.2) and/or in a hard copy by means of a printer unit (12.5).

14. Method according to one of Claims 1 to 12,
**characterized in**
**that** a linkage with an external system is performed with the aid of a PSD device (20).

15. Apparatus for establishing intended changes (Δε*) and actual changes (Δε) of spatial angles of a main axis (e) of a sensor or effector which is attachable to a receiver (4.1), which receiver (4.1) is rotatable directly around a first axis of rotation (I, b, a) and indirectly around at least one further axis of rotation (I), with a coder device (10), which is designed for the purpose of providing the intended changes (Δε*) of the spatial angle of a main axis (e) of the sensor and/or effector during rotations of the receiver (4.1),
**characterized in**
**that** the apparatus comprises
- an optical-electronic angular measurement device (5), attachable to the receiver (4.1), which has at least two measurement axes, to detect the actual changes (Δε) of the spatial angle of the main axis (e) during rotations around only one of the axes of rotation (I, b, a), and
- a storage unit (12.2) to store the intended changes (Δε*) and the associated actual changes (Δε).

16. Apparatus according to Claim 15,
**characterized in**
**that** the optical-electronic angular measurement device (5) has a total of three measurement axes, which are preferably orthogonal to one another, and is preferably attachable to the receiver (4.1) in such a way that, within the scope of a usal manufacturing and mounting precision, one of the measurement axes is coincident at least in direction with the main axis (e).

17. Apparatus according to one of Claims 15 to 16,
**characterized in**
**that** the angular measurement device (5) has a laser gyro.

18. Apparatus according to one of Claims 15 to 17,
**characterized in**
**that** it further comprises a data processing system (12), having a computer unit (12.1) for calculating angular errors as differences between the actual changes (Δε) determined by the angular measurement device (5) and the intended changes (Δε*) provided by the coder device (10).

19. Apparatus according to Claim 18,
**characterized in**
**that** the computer unit (12.1) is designed for the purpose of establishing an angular error difference between a calculated angular error and a predefinable limiting value.

20. Apparatus according to one of Claims 17 to 19,
**characterized in**
**that** the computer unit is implemented for the purpose of producing a matrix on the basis of the actual changes and intended changes.

21. Apparatus according to one of Claims 17 to 20,
**characterized in**
**that** the data processing system (12) has a printer unit (12.5) in order to produce hard copies of at least part of the established data.

22. Apparatus according to one of Claims 17 to 21,
**characterized in**
**that** the data processing system (12) has an input unit (12.3) to control functions of the coder device (10) and/or of the angular measurement device (5) and/or of the data processing system (12).

23. Apparatus according to one of Claims 15 to 22,
**characterized in**
**that** it is decoupled from external positioning devices.

24. Apparatus according to one of Claims 15 to 23,
**characterized in**
**that** it may be coupled to an external positioning device using a PSD device (20).

25. Use of the apparatus according to one of Claims 15 to 24,
**characterized in**
**that** a carrier base (8), onto which the receiver (4.1) is attached via a carrier (6), is directly or indirectly attachable to a movable mounting surface (1).

26. Use of the apparatus according to one of Claims 15 to 24,
**characterized in**
**that** the receiver (4.1), the carrier (6), and the carrier base (8), are parts of a tracking device (2), which is intended for the purpose of being aligned with the position of an external object through correlation of the main axis (e).

27. Use according to Claim 26,
**characterized in**
**that** the tracking device (2) is an optical tracking device and the main axis (e) is the main axis of an image recording device which forms the sensor.

28. Use according to Claim 26,
**characterized in**
**that** the tracking device (2) is an artillery weapon and the main axis (e) is the main axis of a weapon barrel which forms the effector.

## Revendications

1. Procédé de détermination de modifications effectives (Δε) et de modifications théoriques (Δε*) d'un angle solide d'un axe principal (e) d'un détecteur ou effecteur fixé sur un logement (4.1), lequel logement (4.1) peut pivoter directement autour d'un premier axe de rotation (I) et indirectement autour d'un autre axe de rotation (b, a), dans lequel
- un dispositif optoélectronique de mesure angulaire (5) est fixé avec au moins deux axes de mesure au niveau du logement (4.1),
- pour un premier des axes de rotation (I, b, a), on réalise un processus de détermination, dans lequel une rotation se produit selon des étapes de rotation autour de ce premier axe (I, b, a) tandis que chaque rotation autour d'au moins un des autres axes est exclue, et dans lequel après chaque étape de rotation,
- on enregistre et mémorise une première modification effective (Δε) de l'angle solide de l'axe principal (e) par le dispositif de mesure angulaire (5), et
- une première modification théorique (Δε*) de l'angle solide de l'axe principal (e) est mise à disposition et mémorisée par un dispositif codeur (10).

2. Procédé selon la revendication 1,
**caractérisé en**
**ce que** pour au moins un autre axe de rotation (I, b, a), on réalise un processus de détermination dans lequel se produit une rotation autour de cet autre axe au moins (I, b, a) par étapes de rotation, tandis que des rotations autour du premier et autour des éventuels autres axes de rotation sont exclues, et **en ce qu'**après chaque étape de rotation,
- une seconde modification effective (Δε) de l'angle solide de l'axe principal de l'effecteur (e) est enregistrée et mémorisée par le dispositif de mesure angulaire (5), et
- une seconde modification théorique (Δε*) de l'angle solide de l'axe principal de l'effecteur (e) est mise à disposition et mémorisée par un dispositif codeur (10).

3. Procédé selon la revendication 1 ou 2,
**caractérisé en**
**ce que** l'erreur angulaire est déterminée et mémorisée en tant que différences entre les modifications effectives (Δε) et les modifications théoriques associées (Δε*), où on forme et documente une matrice par exemple avec les erreurs angulaires enregistrées.

4. Procédé selon la revendication 3, **caractérisé en**
**ce qu'**après la détermination des erreurs angulaires, on réalise une comparaison dans laquelle les erreurs angulaires sont comparées à une valeur limite prédéfinie qui est supérieure ou égale à 0°.

5. Procédé selon la revendication 4, **caractérisé en**
**ce que** l'on entreprend des mesures de compensation d'au moins une partie des erreurs angulaires dans le cas où les erreurs angulaires sont supérieures aux valeurs limite prédéfinies.

6. Procédé selon la revendication 5, **caractérisé en**
**ce que** les mesures de compensation des erreurs angulaires comprennent une modification de l'exécution et/ou de la disposition d'au moins une des pièces provoquant les erreurs angulaires.

7. Procédé selon la revendication 5, **caractérisé en**
**ce qu'**après la compensation d'une erreur angulaire d'un ou de plusieurs processus de détermination et comparaisons, et éventuellement après chaque comparaison, on entreprend d'autres mesures de compensation de l'erreur angulaire.

8. Procédé selon la revendication 5, **caractérisé en**
**ce que** les mesures de compensation d'au moins une partie de l'erreur angulaire se font par calcul.

9. Procédé selon la revendication 1, **caractérisé**
- **en ce qu'**avant la réalisation du premier processus de détermination, on détermine la déviation axiale spatiale entre un axe de mesure principal du dispositif de mesure angulaire (5) et l'axe principal (e), et
- **en ce que** l'on entreprend des mesures de compensation de cette déviation axiale.

10. Procédé selon la revendication 9, **caractérisé en**
**ce que** les mesures de compensation de la déviation axiale comportent une modification de la disposition de l'appareil optoélectronique de mesure angulaire (5).

11. Procédé selon la revendication 9, **caractérisé en**
**ce que** les mesures de compensation de la déviation axiale sont réalisées par calcul lors de l'établissement de la détermination des modifications effectives de l'angle.

12. Procédé selon l'une des revendications 1 à 11,
**caractérisé en**
**ce qu'**il est réalisé de façon au moins semi-automatique mais avec la possibilité d'une intervention manuelle, à l'aide d'une unité d'entrée (12.4) et de préférence d'une unité de visualisation (12.3).

13. Procédé selon l'une des revendications 1 à 12,
**caractérisé en ce que** les données sont conservées dans une unité de mémorisation (12.2) et/ou au moyen d'une unité d'impression (12.5) sous forme d'une copie papier.

14. Procédé selon l'une des revendications 1 à 12,
**caractérisé en ce qu'**on réalise une opération logique avec un système externe à l'aide d'un dispositif de type PSD (20).

15. Dispositif de détermination de modifications théoriques (Δρ*) et de modifications effectives (Δε) d'angles solides d'un axe principal (e) d'un détecteur ou effecteur fixé sur un logement (4.1), lequel logement (4.1) peut pivoter directement autour d'un premier axe de rotation (1, a, b) et indirectement autour d'au moins un autre axe de rotation (1), comportant un dispositif codeur (10) qui est exécuté pour que, lors de rotations du logement (4.1), on mette à disposition les modifications théoriques (Δε*) de l'angle solide d'un axe principal (e) du détecteur ou de l'effecteur,
**caractérisé en**
**ce que** le dispositif comprend
- un dispositif optoélectronique de mesure angulaire (5) pouvant être fixé sur le logement (4.1) et qui possède au moins deux axes de mesure, pour enregistrer les modifications effectives (Δε) de l'angle solide de l'axe principal (e) lors de rotations autour d'uniquement un des axes de rotation (l, b, a) et
- une unité de mémorisation (12.2) pour mémoriser les modifications théoriques (Δε*) et les modifications effectives (Δε) associées.

16. Dispositif selon la revendication 15,
**caractérisé en**
**ce que** le dispositif optoélectronique de mesure angulaire (5) présente au total trois axes de mesure de préférence perpendiculaires les uns aux autres, et peut être de préférence fixé sur le logement (4.1) de façon telle que dans le cadre d'une précision usuelle de fabrication et de montage, un des axes de mesure coïncide avec l'axe principal (e) au moins pour ce qui est de la direction.

17. Dispositif selon l'une des revendications 15 à 16,
**caractérisé en**
**ce que** le dispositif de mesure angulaire (5) présente un gyroscope à fibre laser.

18. Dispositif selon l'une des revendications 15 à 17,
**caractérisé en**
**ce qu'**il présente en plus une installation de traitement des données (12), avec une unité de calcul (12.1) destinée à calculer les erreurs angulaires en tant que différences entre les modifications effectives (Δε) déterminées par le dispositif de mesure angulaire (5) et les modifications théoriques (Δε*) mises à disposition par le dispositif codeur (10).

19. Dispositif selon la revendication 18,
**caractérisé en**
**ce que** l'unité de calcul (12.1) est exécutée de façon à déterminer une différence d'erreur angulaire entre une erreur angulaire calculée et une valeur limite prédéterminée.

20. Dispositif selon l'une des revendications 17 à 19,
**caractérisé en**
**ce que** l'unité de calcul est exécutée pour former une matrice sur la base des modifications effectives et des modifications théoriques.

21. Dispositif selon l'une des revendications 17 à 20,
**caractérisé en**
**ce que** l'installation de traitement des données (12) possède une unité d'impression (12.5) pour élaborer des copies papier d'au moins une partie des données déterminées.

22. Dispositif selon l'une des revendications 17 à 21,
**caractérisé en**
**ce que** l'installation de traitement des données (12) possède une unité d'entrée (12.3) destinée à commander des fonctions du dispositif codeur (10) et/ou du dispositif de mesure angulaire (5) et/ou de l'installation de traitement des données (12).

23. Dispositif selon l'une des revendications 15 à 23,
**caractérisé en**
**ce qu'**il est découplé de positionnements externes.

24. Dispositif selon l'une des revendications 15 à 23,
**caractérisé en**
**ce qu'**il peut être couplé au moyen d'un dispositif de type PSD (20) à un positionnement externe.

25. Utilisation du dispositif selon l'une des revendications 15 à 24,
**caractérisée en**
**ce qu'**une base de support (8) au niveau de laquelle est fixé le logement (4.1), via un support (6), peut être fixée directement ou indirectement sur une surface de montage mobile.

26. Utilisation du dispositif selon l'une des revendications 15 à 24,
**caractérisée en**
**ce que** le logement (4.1), le support (6) et la base de support (8) sont des parties d'un dispositif suiveur (2) qui est déterminé, pour s'aligner, par corrélation de l'axe principal (e) avec la position d'un objet extrême.

27. Utilisation selon la revendication 26,
**caractérisée en**
**ce que** le dispositif suiveur (2) est un dispositif optique de poursuite et que l'axe principal (e) est l'axe principal d'un dispositif de prise de vues formant le détecteur.

28. Utilisation selon la revendication 26,
**caractérisée en**
**ce que** le dispositif suiveur (2) est une arme à feu et que l'axe principal (e) est l'axe principal du canon d'arme formant l'effecteur.
